# EUROPÄISCHE PATENTSCHRIFT

(11) **EP 1 284 928 B1**
(45) Veröffentlichungstag und Bekanntmachung des Hinweises auf die Patenterteilung: **11.05.2005**
(21) Anmeldenummer: 00943726.0
(22) Anmeldetag: 22.05.2000
(51) Int. Cl.: C01B 21/44

(54) **VERFAHREN ZUR HERSTELLUNG KONZENTRIERTER SALPETERSÄURE SOWIE ANLAGE ZUR DURCHFÜHRUNG EINES SOLCHEN VERFAHRENS**
METHOD FOR PRODUCING CONCENTRATED NITRIC ACID AND INSTALLATION FOR CARRYING OUT A METHOD OF THIS TYPE
PROCEDE POUR LA PRODUCTION D'ACIDE NITRIQUE CONCENTRE, AINSI QU'INSTALLATION POUR L'EXECUTION DE CE PROCEDE

(43) Veröffentlichungstag der Anmeldung: 26.02.2003
(73) Patentinhaber: QVF Engineering GmbH, 55122 Mainz (DE)
(72) Erfinder: DICHTL, Gottfried, A-55268 Nieder-Olm (AT); DORSTEWITZ, Frank, D-46562 Voerde (DE); SASSENBERG, Manfred, D-55127 Mainz (DE); WALTER, Ulrich, D-65510 Idstein (DE)
(74) Vertreter: Andrae, Steffen, Dr.
(86) Internationale Anmeldenummer: PCT/EP2000/004641
(87) Internationale Veröffentlichungsnummer: WO 2001/089989

(56) Entgegenhaltungen:
- EP-A- 0 330 351
- DE-B- 1 056 095
- FR-A- 2 003 298

## Beschreibung

Die Erfindung betrifft ein Verfahren zur Herstellung einer Salpetersäure einer Konzentration von 75 bis 99,9% aus einer verdünnteren, gegebenenfalls verunreinigten Salpetersäure, bei dem man eine Salpetersäure einer Konzentration von etwa 45 bis 70% im Kontakt mit einem flüssigen Extraktionsmittel zur Verhinderung der Bildung eines Salpetersäure-Wasser-Azeotrops bei Überdruck und/oder Normaldruck und/oder Vakuum rektifiziert, die Dämpfe der konzentrierten Salpetersäure kondensiert und eine konzentrierte Salpetersäure gewinnt und bei dem man außerdem das Extraktionsmittel unter Rückkonzentrierung aufarbeitet und in die Extraktivrektifikation zurückführt, sowie eine Anlage zur Durchführung einer bevorzugten Ausführungsform eines solchen Verfahrens.

Salpetersäure von höherer Konzentration, häufig mehr als 98 Gew.-% HNO₃, wird in vielen organischen Umsetzungen, wie zum Beispiel in Nitrierungen, benötigt.

Übliche Herstellungsverfahren liefern Salpetersäure mit etwa 65 - 67 Gew.-% HNO₃. Es ist daher ein zusätzlicher Prozeß erforderlich, um hochkonzentrierte Salpetersäure zu erhalten. Das zweckmäßigste Verfahren für die Konzentrierung von Salpetersäure über den azeotropen Punkt hinaus ist die Extraktiv-Rektifikation. Dabei werden flüssige Extraktionsmittel eingesetzt, vor allem konzentrierte Schwefelsäure oder wäßrige Magnesiumnitrat-Lösungen, wobei das Extraktionsmittel in der überwiegenden Zahl der Fälle Schwefelsäure ist.

Die thermodynamischen Grundlagen der Extraktivrektifikation unter Verwendung eines Extraktionsmittels sind wie folgt:

Das Stoffsystem Salpetersäure/ Wasser weist bei Atmosphärendruck (1 bar absolut) ein Maximumazeotrop mit einer Siedetemperatur von 121,8°C bei 69,2 Gew.-% HNO₃ auf. Für Salpetersäurekonzentrationen unterhalb des azeotropen Punktes ist Wasser die leichter flüchtige Komponente. Oberhalb des azeotropen Punktes ist HNO₃ in höherer Konzentration in der Dampfphase enthalten. Zum Herstellen hochkonzentrierter Salpetersäure ist es erforderlich, den azeotropen Punkt zu umgehen / zu überwinden. Es ist schon seit langem bekannt, daß mit Hilfe von Extraktionsmitteln, wie zum Beispiel Schwefelsäure oder wässrigen Magnesiumnitratlösungen, die relative Flüchtigkeit des Wassers reduziert werden kann. Für höhere Extraktionsmittelkonzentrationen, wie z.B. Schwefelsäurekonzentrationen von mehr als 50 Gew.-% H₂SO₄, wird die Bildung eines azeotropen Punktes unterdrückt. Somit kann konzentrierte Salpetersäure abdestilliert werden.

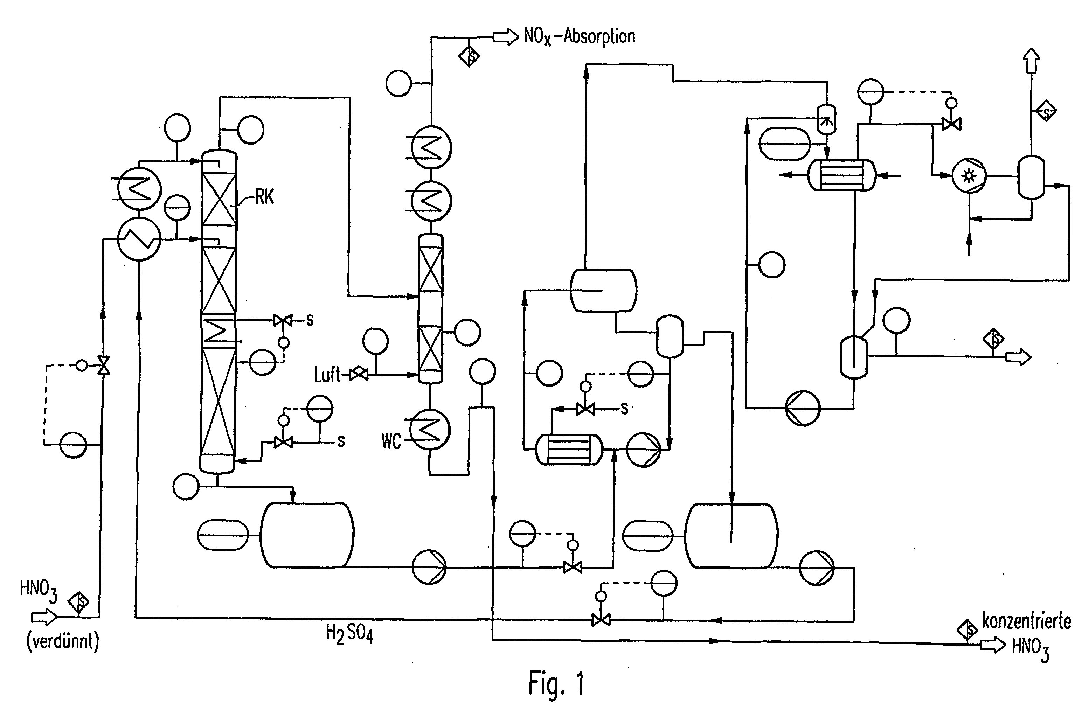

Das Grundverfahren der Konzentrierung von Salpetersäure stammt von Pauling (DE 305553, DE 1056095). Das Verfahren wird in großem Umfange industriell genutzt, uns zwar in verschiedener anlagentechnischer Ausgestaltung. Ein modernes industriell ausgeführtes Verfahren, das mit dem Extraktionsmittel Schwefelsäure arbeitet, wird nachfolgend zum besseren Verständnis der Erfindung in seinen Grundzügen bechrieben (Fa. Schott Engineering GmbH, Druckschrift 60014d 8895.0; vgl. Figur 1). Der eigentliche Prozeß wird im wesentlichen in einer Konzentrierkolonne (RK in Figur 1) durchgeführt, in die am Kopf konzentrierte Schwefelsäure und etwas darunter die verdünnte Salpetersäure eingespeist wird. Durch das Vermischen der Komponenten treten in der Kolonne Mischungs- und Kondensationswärmen auf. Diese Wärmemengen decken jedoch nicht den erforderlichen Energiebedarf des Prozesses. Daher wird am Fuß der Kolonne Direktdampf ("Strippdampf") eingeblasen. Neben seiner Funktion als Wärmeträger sorgt dieser Direktdampf dafür, daß die Salpetersäure aus der ablaufenden verdünnten Schwefelsäure weitestgehend ausgestrippt wird. Die am Kopf der Kolonne entweichenden Dämpfe der konzentrierten Salpetersäure ("HNO₃-Brüden") enthalten auch Stickoxide, die durch die thermische Zersetzung von Salpetersäure entstehen. Die Stickoxide (im wesentlichen NO₂) werden im Kondensator gleichzeitig mit den HNO₃-Brüden zu roter, rauchender Salpetersäure kondensiert. Um die kondensierte, hochkonzentrierte Salpetersäure in farbloser Form zu gewinnen, werden die in der Säure enthaltenen nitrosen Gase in einer nachgeschalteten Kolonne, der sogenannten Bleichkolonne, im Gegenstrom mit Luft ausgestrippt. Die Stickoxide enthaltenden Abgase werden in einer nachfolgende NOₓ-Absorptionsstufe gereinigt.

Eine Gesamtanlage zur Herstellung von hochkonzentrierter Salpetersäure umfaßt neben dem Anlagenzweig für die Salpetersäure-Rektifikation auch einen Anlagenzweig für die Extraktionsmittel-Rückkonzentrierung. Dazu kommen die Anlagenteile für das schon erwähnte Bleichen der rauchenden Salpetersäure sowie die nachgeschaltete NOₓ-Absorption. Für aufzukonzentrierende Salpetersäure ("Feedsäure") mit einer Konzentration von kleiner als ca. 58 Gew.-% HNO₃ ist gegebenenfalls noch eine Vorkonzentrierung zweckmäßig. Darüber hinaus kann es sinnvoll sein, die Salpetersäure durch Überdampfen zu reinigen. Alle Anlagenteile der Gesamtanlage müssen optimal aufeinander abgestimmt sein, um die geforderte Spezifikation bezüglich Produktqualität und Abwasserreinheit bei minimalen Verbräuchen an Betriebsmitteln zu erfüllen. Die Betriebsmittelverbräuche, und dabei insbesondere der Heizenergiebedarf, bestimmen maßgeblich die Betriebskosten des Verfahrens.

Um die Betriebsmittelverbräuche zu minimieren, muß die erforderliche Heizenergie dem Prozeß optimal zugeführt und genutzt werden. Beim klassischen Verfahren erfolgt die Zufuhr der Heizenergie auf direktem Wege mit Dampf, dem Strippdampf. Schon sehr früh ist versucht worden, Direktdampf einzusparen, da erkannt wurde, daß man dadurch den Bedarf an Extraktionsmittel (Schwefelsäure) verringern kann.

In der Praxis sind dazu verschiedene Lösungswege beschritten worden. Beim Verfahren mit wässrigen Magnesiumnitratlösungen als Extraktionsmittel wurde sehr frühzeitig mit einem Sumpfheizer gearbeitet (vg. Ullmanns Encyklopädie der technischen Chemie; 4.Auflage, Band 20, Seite 325). Beim Verfahren unter Verwendung von Schwefelsäure wird bereits seit langem ein sogenannter Mittelheizer, auch.Säulenheizer genannt, eingesetzt (Ullmanns Encyklopädie der technischen Chemie; 4.Auflage, Band 20, Seite 325).

Weiterhin ist es bekannt, daß es möglich ist, Heizenergie einzusparen, wenn der Rückfluß (intern und/oder extern) in der Extraktivrektifikationskolonne vermindert wird. Ein interner Rücklauf liegt z.B. dann vor, wenn die Eintrittstemperatur des Extraktionsmittels niedriger als die Siedetemperatur des Dreistoffgemisches ist, so daß vom Extraktionsmittel zuerst durch Teilkondensation von Bestandteilen der Dampfphase eine bestimmte Wärmemenge aufgenommen wird.

In bisherigen Verfahren, bei denen am Kopf der Extraktivrektifikationskolonne reines Extraktionsmittel, wie z.B. Schwefelsäure, aufgegeben wird, wird dieses Extraktionsmittel zuerst Salpetersäure kondensieren, damit sich die Zusammensetzung des Flüssigkeitsgemisches in Richtung des Gleichgewichtszustands mit der Dampfphase hin verschiebt. Daraus folgt, daß das Extraktionsmittel ausreichend kalt aufgegeben werden muß und dadurch ein erhöhter interner Rücklauf entsteht. Dies führt zu einer zusätzlichen Wärmemenge, die wiederum durch zusätzliche Heizenergie in die Extraktivrektifikation eingebracht werden muß.

Es ist bekannt, daß durch Zugabe von flüssiger Salpetersäure (z.B. einer Teilmenge der aufzukonzentrierenden Salpetersäure) zum Extraktionsmittel das Kondensationsverhalten der Salpetersäure in der Kolonne für die Extraktivrektifikation beeinflußt werden kann. So wird eine Zumischung der aufzukonzentrierenden Salpetersäure zu einem Teilstrom des Extraktionsmittels in der EP 0 330 351 A1 ("Günkel") beschrieben. Ein Nachteil dieses von Günkel beschriebenen Verfahrens ist es jedoch, daß der Gemischstrom aus aufzukonzentrierender Salpetersäure und Extraktionsmittel erst unterhalb einer bereits an höherer Stelle aufgegeben weiteren Menge von reinem Extraktionsmittel eingespeist wird. Daher wird der vorbeschriebene erwünschte Effekt der Verringerung des internen Rücklaufes durch das in der EP 0 330 351 beschriebene Verfahren nicht erreicht.

Ein weiterer Nachteil des Verfahrens von Günkel ist es, daß die für das Gesamtverfahren, das auch die Rückkonzentrierung des Extraktionsmittels umfaßt, erforderliche Energie bereits vollständig der Extraktivrektifikation zugeführt wird, obwohl der Energiebedarf der Extraktivrektifikation wesentlich geringer ist als der Energiebedarf der Extraktionsmittel-Rückkonzentrierung. Durch diese Art der Energiezufuhr ergibt sich eine hohe erforderliche Umlaufmenge an Extraktionsmittel und ein großer Mindest-Durchmesser der Extraktivrektifikationskolonne.

In dem von Günkel beschriebenen Verfahren wird 51-99% der Menge der aufzukonzentrierenden Salpetersäure totalverdampft in die Extraktivrektifikation eingespeist. Durch diese Art der Einspeisung wird die Dampfmenge in der Kolonne wesentlich erhöht, so daß in Verbindung mit der erhöhten Kreislaufmenge an Extraktionsmittel Kolonnen größeren Durchmessers für die Extraktivrektifikation benötigt werden.

Ein weiterer Nachteil des von Günkel beschriebenen Verfahrens ist es, daß am Kopf der Kolonne eine erheblich erhöhte Rücklaufmenge an hochkonzentrierter Salpetersäure erforderlich ist, um hochkonzentrierten Salpetersäuredampf mit 99 bis 99,9 Gew.-% HNO₃ zu erhalten.

Bei allen bisher errichteten Anlagen zur Hochkonzentrierung von unterazeotroper Salpetersäure (Schwachsäure) zu Salpetersäure mit mehr als 90 Gew-%, vorzugsweise mehr als 98 Gew.-% ("Hokosäure"), bestimmt der Energiebedarf, wie z.B. Heizdampf und Kühlwasser, ganz wesentlich die Produkt-Herstellungskosten. So werden bei größeren Anlagen, wie sie in jüngerer Vergangenheit üblicherweise errichtet wurden (mit Sumpfheizer und/oder Mittelheizer), ausgehend von einer ca. 67 gew.-%igen HNO₃ noch Heizdampfmengen von ca. 1,5 kg pro kg erzeugter 99 gew.-%iger Salpetersäure benötigt.

Die Aufgabe der Erfindung ist es daher insbesondere, bei einem gattungsgemäßen Verfahren den hohen Betriebsmittelbedarf gegenüber herkömmlichen Verfahren bzw. Anlagen wesentlich zu senken, wobei möglichst gleiche oder sogar geringere Gesamtanlagen-Herstellkosten erreicht werden sollen. Insbesondere soll dabei vermieden werden, daß man Kolonnen mit sehr großen Abmessungen verwenden muß, wie sie bei hohen Rücklaufverhältnissen bzw. hohen Kreislaufmengen an Extraktionsmittel erforderlich sind.

Diese Aufgabe wird durch ein Verfahren mit den Grundmerkmalen gemäß Anspruch 1 gelöst. Vorteilhafte Ausgestaltungen verschiedener Ausführungsformen eines solchen Verfahrens weisen die in den Unteransprüchen 2 bis 19 wiedergegebenen zusätzlichen Merkmale auf.

Eine Anlage zur Durchführung einer besonders bevorzugten Ausführungsform des erfindungsgemäßen Verfahrens unter Verwendung einer geteilten Kolonne für die Konzentrierung der Salpetersäure weist die in den Ansprüchen 20 und 21 wiedergegebenen Merkmale auf.

Die Erfindung betrifft ferner das verallgemeinerte Grundverfahren zur Azeotroptrennung durch Extraktivrektifikation, wie es durch Anspruch 22 charakterisiert wird.

Nachfolgend wird die Erfindung unter Bezugnahme auf Figuren, die verschiedene Varianten einer bevorzugten Ausführungsform des erfindungsgemäßen Verfahrens zeigen, noch näher erläutert. In den Figuren zeigen:
- Figur 1: das Fließdiagramm eines industriell durchgeführten bekannten Verfahrens zur Herstellung von konzentrierter Salpetersäure durch Extraktivrektifikation unter Verwendung von Schwefelsäure als Extraktionsmittel, mit einem Extraktivreaktifikationszweig und einem Zweig für die Rückkonzentrierung des Extraktionsmittels Schwefelsäure, wie es im einleitenden Teil der Beschreibung in allgemeiner Form beschrieben wurde;
- Figur 2: das Fließdiagramm des Extraktivrektifikationszweigs einer ersten Ausführungsform des erfindungsgemäßen Verfahrens unter Verwendung einer geteilten Extraktivrektifikationskolonne;
- Figur 3: das Fließdiagramm des Zweigs für die Rückkonzentrierung des Extraktionsmittels, wie letztere in Verbindung mit einer Extraktivrektifikation gemäß der Ausführungsform des erfindungsgemäßen Verfahren gemäß Figur 2 durchgeführt werden kann;
- Figur 4: das Fließdiagramm des Extraktivrektifikationszweigs einer alternativen Ausführungsform des erfindungsgemäßen Verfahren unter Verwendung einer geteilten Extraktivrektifikationskolonne, bei der die zweite Kolonne bei Unterdruck betrieben wird;
- Figur 5: das Fließdiagramm des Zweigs für die Aufarbeitung und Rückkonzentrierung eines Extraktionsmittels, das einen relativ hohen Anteil an Rest-Salpetersäure aufweist, wie sie in Verbindung mit einer Extraktivrektifikation gemäß einer der Ausführungsformen des erfindungsgemäßen Verfahrens gemäß Figur 2 oder 4 zum Einsatz kommen kann.

Um das Verständnis der Erläuterungen zu den Merkmalen und Vorteilen des erfindungsgemäßen Verfahrens in seinen verschiedenen bevorzugten Ausführungsformen und Gestaltungsmöglichkeiten zu erleichtern, sollen zuerst konkrete Ausführungsformen des Verfahrens bzw. der Anlagen zu seiner Durchführung anhand der Figuren näher erläutert werden.

Bei den Erläuterungen der Figuren wird beispielhaft davon ausgegangen, daß es bei dem Verfahren um die Herstellung einer hochkonzentrierten Salpetersäure von ca. 99.Gew.% HNO₃ durch Aufkonzentrierung einer unterazeotropen, ca. 67 gew.-%igen Salpetersäure geht. Es wird ferner angenommen, daß als Extraktionsmittel Schwefelsäure verwendet wird. Eine Beschränkung des erfindungsgemäßen Verfahrens auf genannten Bedingungen soll durch eine derartige konkretisierte Beschreibung nicht erfolgen, sondern Abwandlungen, bei denen mit anderen Konzentrationen der Ausgangs- und Endprodukte und anderen Extraktionsmitteln gearbeitet wird, werden von der Erfindung ausdrücklich umfaßt. Der Fachmann kann die ggf. erforderlichen Anpassungen des Verfahrens auf der Basis der vorliegenden Beschreibung und unter Rückgriff auf sein Fachwissen jederzeit ohne größere Schwierigkeiten vornehmen.

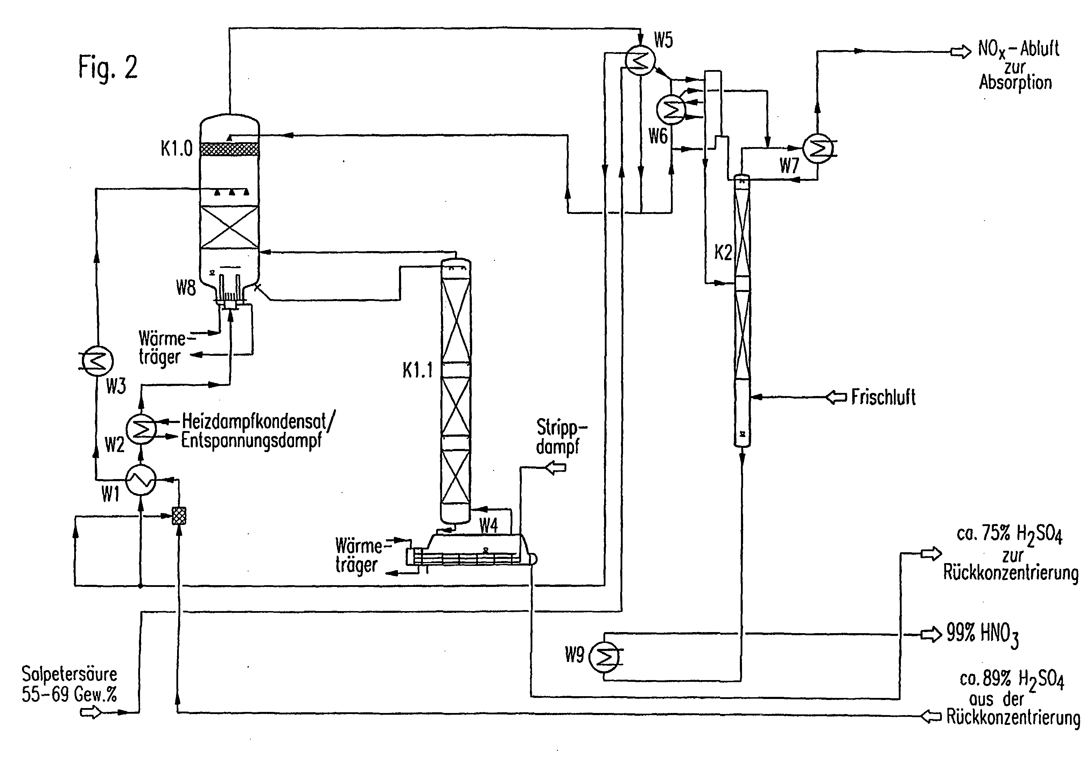

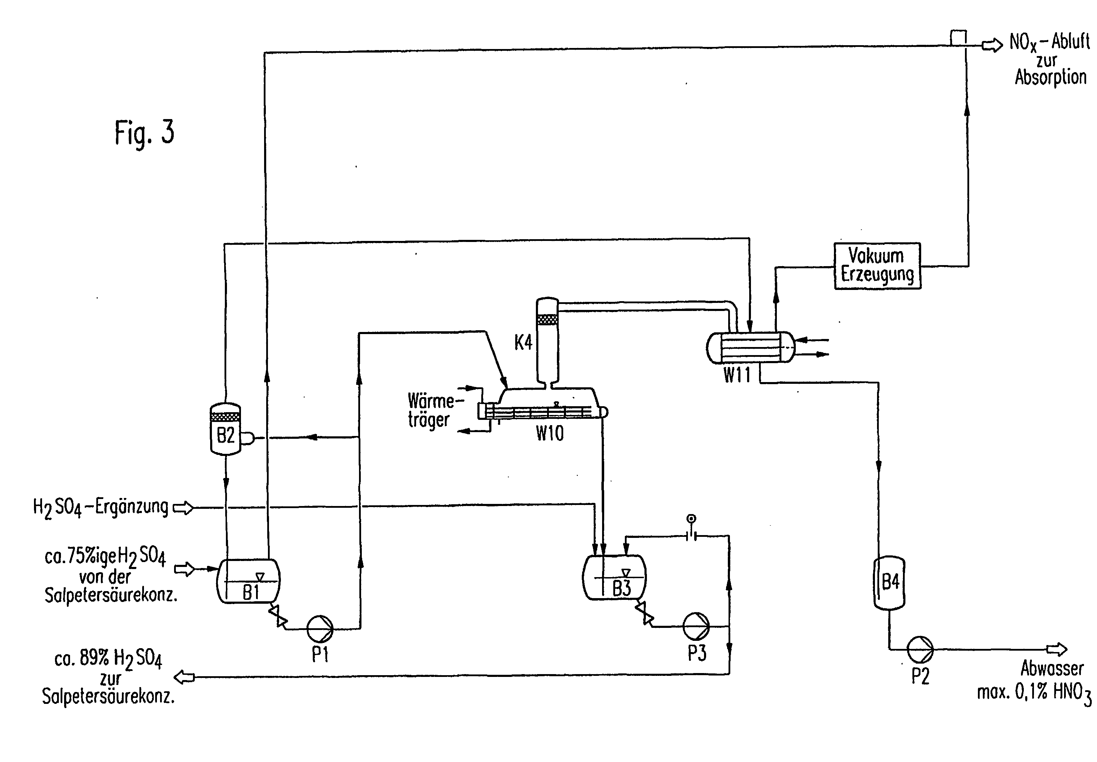

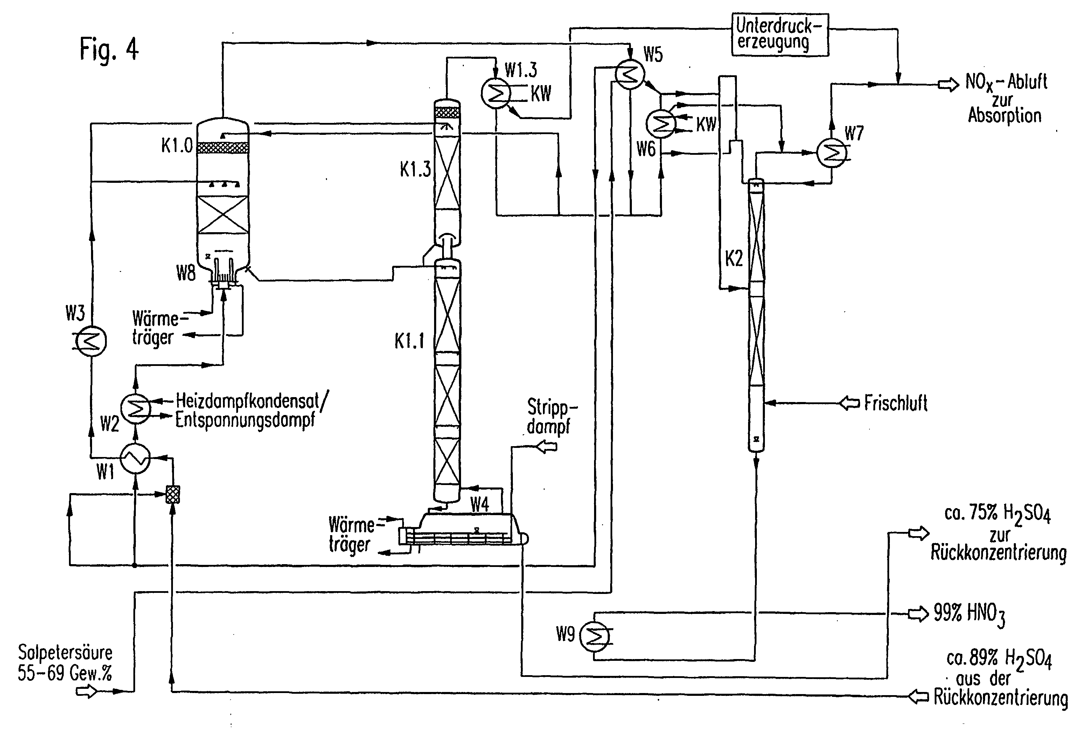

In den Figuren 2 bis 5 werden Anlagenteile, die einander funktionsmäßig entsprechen, mit gleichen Bezugssymbolen gekennzeichnet. Die nachfolgenden Ausführungen beziehen sich in erster Linie auf Figur 2 in Verbindung mit Figur 3, gelten jedoch direkt auch für die Ausführungsform gemäß Figur 4, abgesehen von den offensichtlichen Abweichungen, die sich in Figur 4 dadurch ergeben, daß die zweite Kolonne K1.1 bei Unterdruck betrieben wird und aus diesem Grund zusätzlich durch die Teil-Kolonne K1.3 ergänzt ist.

Bei einem Verfahren, wie es anhand der Figuren 2 bis 5 erläutert wird, erfolgt die Konzentrierung der zugeführten, etwa azeotropen Salpetersäure (aufzukonzentrierenden Salpetersäure) auf 99 Gew.-% durch Extraktivrektifikation. Als Extraktionsmittel kommt eine möglichst konzentrierte Schwefelsäure, d.h. eine vorzugsweise 80 bis 96 gew.-%ige, besonders bevorzugt eine 89 gew.-%ige Schwefelsäure, zum Einsatz.

Bei der beschriebenen besonders bevorzugten Ausführungsform wird die Extraktivrektifikation in zwei separaten Kolonnen K1.0 und K1.1 durchführt, wobei die erste der beiden Kolonnen K1.0 der Rektifikation der aufzukonzentrierenden Salpetersäure und Gewinnung eines Dampfes der konzentrierten Salpetersäure ("Salpetersäurebrüden") dient und die zweite der beiden Kolonnen K1.1 der Abtrennung der Salpetersäure aus der Schwefelsäure dient.

Die aufzukonzentrierende Salpetersäure wird über die Wärmeübertrager W5 sowie W1 und W2 in den Sumpf der ersten Kolonne K1.0 eingespeist. Die aufzukonzentrierende Salpetersäure wird hierbei im Wärmeübertrager W5 mittels der am Kopf der Kolonne K1.0 austretenden Salpetersäurebrüden vorgewärmt, dann weiter im Wärmeübertrager W1 mittels der rückkonzentrierten Schwefelsäure weiter erhitzt und anschließend im Wärmeübertrager W2, der mit Heizdampfkondensat betrieben wird, teilverdampft.

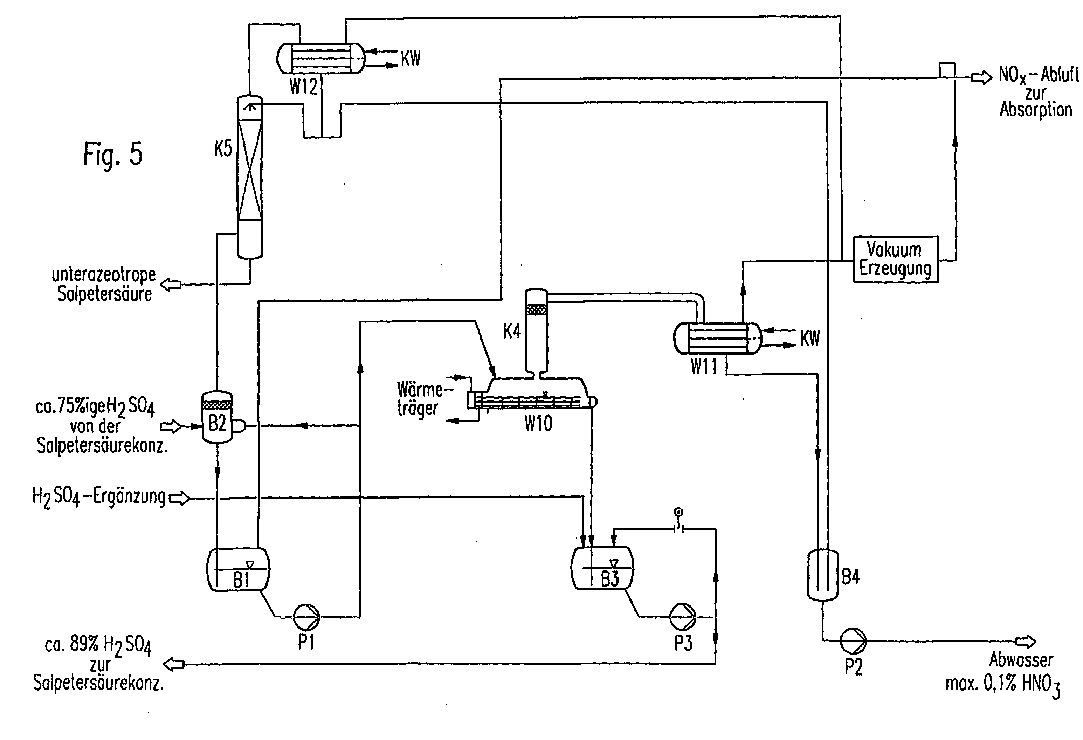

Die rückkonzentrierte Schwefelsäure aus Behälter B3 (Fig.3; Fig.5), die etwa Siedetemperatur aufweist, wird über den Wärmeübertrager W1 und den weiteren Wärmeüberträger W3, der im wesentlichen der weiteren Temperaturregelung der Schwefelsäure durch Kühlung dient, zum Kopf der Kolonne K1.0 gefördert. Ein Teilstrom der aufzukonzentrierenden Salpetersäure wird über einen Mischer, der in den Figuren 2 und 4 vor dem Wärmeüberträger W1 gezeigt ist, dem Schwefelsäurestrom beigemischt. Der Energieeintrag in die Kolonnen K1.0 und K1.1 wird, zusätzlich zur Teilverdampfung in W2, mittels des Kolonnenheizers W8 der Kolonne K1.0 und des der Kolonne K1.1 zugeordneten Verdampfers (Sumpfheizers) W4 realisiert. Die Direkteinspeisung einer sehr geringen Menge an Strippdampf in W4 bzw. die zweite Kolonne K1.1 für Anfahr-und Regelvorgänge dient vorwiegend dazu, den Rest-Salpetersäuregehalt in der aus dem Verdampfer W4 ablaufenden Schwefelsäure zu senken. Die am Kopf der Kolonne K1.0 austretenden Salpetersäurebrüden werden mittels der Wärmeübertrager W5 und W6 teilkondensiert und der mit Strippluft betriebenen Bleichkolonne K2 aufgegeben. Das aus der Bleichkolonne austretende Gasgemisch wird über den Wärmeübertrager W7 nachkondensiert. Das NOx-haltige Abgas wird zur NOx-Absorption geleitet.

Die am Sumpf der Kolonne K1.1 über den Sumpfheizer W4 abgeleitete Schwefelsäure wird in dem Behälter B1 (Fig.3) gesammelt und zur Aufkonzentrierung in einen unter Vakuum betriebenen liegenden Verdampfer W10 gefördert. Ein Teilstrom wird über den Flashbehälter B2 gefördert und dort einer Entspannungsverdampfung unterzogen, so daß im Behälter B1 eine Temperaturreduktion erfolgt. Die aus dem Verdampfer W10 aufsteigenden Brüden (weitestgehend Wasserdampf) werden über eine Abscheidkolonne K4 in den Kondensator W11 geleitet, in dem auch gleichzeitig die Brüden aus dem Flashbehälter B2 niedergeschlagen werden. Das Kondensat gelangt, aufgrund einer Einleitung über ein Tauchrohr barometrisch abgetaucht, in den Behälter B4. Die rückkonzentrierte Schwefelsäure, die eine relativ hohe Temperatur knapp unterhalb ihres Siedepunkts aufweist, wird aus dem Behälter B3 in die erste K1.0 zurückgeführt.

In diesem vorstehenden Beispiel wird die Salpetersäurekonzentrierung bei einem Absolutdruck von ca. 950 mbar und der Rückkonzentrierungsbereich für die Schwefelsäure bei einem Absolutdruck von ca. 80 mbar betrieben.

Für bestimmte Anforderungen/ Aufgabenstellungen kann das Verfahren z.B. entsprechend Fig. 4 und Fig. 5 variiert werden. Dabei wird die Kolonne K1.1 bei Unterdruck betrieben, was die zusätzliche Teil-Kolonne K1.3 erforderlich macht und ggf. eine Anpassung des Zweigs für die Schwefelsäure-Rückkonzentrierung erfordert.

Das erfindungsgemäße Verfahren, wie es oben unter Bezugnahme auf die Figuren erläutert wurde, weist eine Reihe von Vorteilen bzw. Änderungen gegenüber den herkömmlichen Verfahren auf, die nachfolgend in Verbindung mit den Anlagenteilen, in denen sich das erfindungsgemäße Verfahren bzw. bevorzugte Ausgestaltungen eines solchen Verfahrens verkörpert, einzeln genauer erläutert werden sollen.

Das erfindungsgemäße Verfahren wird so durchgeführt, daß am Kopf der Kolonne K1.0 ein Siedegleichgewicht zwischen Salpetersäure, Schwefelsäure und Wasser herrscht. In der flüssigen Phase muß zu diesem Zweck ausreichend Salpetersäure enthalten sein, damit in der Dampfphase der gewünschte hohe Salpetersäureanteil von bis zu 99.9 Gew.-% HNO₃ erreicht werden kann. Überraschenderweise konnte festgestellt werden, daß wenn vor Einspeisung des Extraktionsmittels in die Kolonne K1.0, Salpetersäure, bevorzugt 55 bis 69 gew.-%ige Salpetersäure, dem Extraktionsmittel, oder zumindest 50% der Extraktionsmittelmenge, in einer Menge von 0,1 bis 60 % der gesamten aufzukonzentrierenden Salpetersäure zuspeist wird, das Siedegleichgewicht des Flüssigkeits-/ Dampfgemisches am Kopf der Kolonne K1.0 leichter erreicht wird. Durch diese Zuspeisung wird eine Verminderung der kolonneninternen Salpetersäurekondensation in die Schwefelsäure und damit eine Verminderung des Heizenergiebedarfs erzielt. Angestrebt und geregelt wird dabei ein gezieltes Mengenverhältnis entsprechend den Gleichgewichtsbedingungen für die jeweils vorliegenden Zusammensetzungen der Zulaufströme (aufzukonzentrierende Salpetersäure und rückkonzentrierte Schwefelsäure).

Aufgrund der genannten Maßnahme kann die bisher erforderliche starke Abkühlung des Extraktionsmittels, zum Beispiel im Falle von Schwefelsäure auf unter 80 °C, entfallen, und das Extraktionsmittel kann wärmer, z.B. als Schwefelsäure einer Temperatur von 90 bis 160 °C, der Kolonne K1.0 zugeführt werden.

Bei den meisten bisher gebauten Anlagen wurde ferner die aufzukonzentrierende Salpetersäure als Flüssigkeit in die Extraktivrektifikation eingespeist. Gemäß der vorliegenden Erfindung wird der Wärmeinhalt der zur Verfügung stehenden Prozeß-, Heizdampf- und Heizdampfkondensatströme des Gesamtverfahrens, das die Extraktivrektifikation und die Extraktionsmittel-Rückkonzentrierung umfaßt, so weit wie möglich genutzt, und die aufzukonzentrierende Salpetersäure wird teilverdampft in die Extraktivrektifikation eingespeist.

Zur Verfügung stehen und vorzugsweise genutzt werden in diesem Zusammenhang folgende Wärmemengen:
a) Die Kondensationsenthalpie der am Kopf der Kolonne K1.0 austretenden Salpetersäurebrüden (z.B. mittels Wärmeübertrager W5).
b) Die Enthalpiedifferenz des rückkonzentrierten Extraktionsmittels, z.B. der Schwefelsäure, zwischen dem Austritt aus der Rückkonzentrierung etwa im Siedezustand und dem Eintrittszustand in die Kolonne K1.0 (z.B. mittels Wärmeübertrager W1).
c) Die Enthalpiedifferenz des hochgespannten Heizdampfkondensates mit einem Druck im Bereich von 6 bis 40 barü und/oder des Entspannungsdampfes aus dem Heizdampfkondensat und/oder eines entspannten Heizdampf/Kondensatgemisches mit einem Druck im Bereich von 1 bis 16 barü (z.B. mittels Wärmeübertrager W2 durch Heizdampfkondensatnutzung). Vorzugsweise ist das Heizdampfkondensat das Heizdampfkondensat, das von einem, von mehreren oder von allen Heizern (zum Beispiel von dem Heizer des Verdampfers W4 für die Kolonne K1.1 und/oder von dem Heizer W10 des Verdampfers aus der Rückkonzentrierung) der Anlage anfällt.
d) Die Kondensationsenthalpie der Brüden aus z.B. der Normal- oder Überdruckstufe einer möglichen zwei- oder mehrstufigen Rückkonzentrierung des Extraktionsmittels, z.B. der Schwefelsäure, bei gleichzeitigem Vakuumbetrieb der Kolonne K1.1.

Bei Ausnutzung der Wärmemengen gemäß den obigen Erläuterungen unter Beachtung der Zumischung von Salpetersäure zu dem Extraktionsmittel wird die aufzukonzentrierende Salpetersäure in einer Menge von 40 bis 99,9 % der gesamten aufzukonzentrierenden Salpetersäuremenge unterhalb der Aufgabestelle des Extraktionsmittels bzw. des Extraktionsmittel-/Salpetersäuregemisches in Form eines Dampf-/Flüssigkeitsgemisches oder in Dampf und Flüssigkeit getrennt in die Kolonne K1.0 eingespeist.

Die Extraktivrektifikation wird gemäß einer besonders bevorzugten Ausführungsform in zwei separaten Kolonnen (K1.0 und K1.1) oder, was einer Aufteilung in zwei einzelne Kolonnen sehr nahe kommt, in einer in zwei getrennte Kolonnenabschnitte (K1.0 und K1.1) aufgeteilten Konzentrierkolonne durchgeführt, wobei die erste der beiden Kolonnen (K1.0) der Rektifikation der aufzukonzentrierenden Salpetersäure und Gewinnung eines Dampfes der konzentrierten Salpetersäure dient, während die zweite der beiden Kolonnen (K1.1) der Abtrennung der Salpetersäure aus dem Extraktionsmittel dient. Die Aufteilung in die beiden Kolonnen (K1.0, K1.1). erfolgt etwa am Ort der Einspeisestelle für die aufzukonzentrierende Salpetersäure. Mit Hilfe entsprechender Einbauten wird ferner vorzugsweise eine innige Durchmischung des in der oberen Kolonne K1.0 herabrieselnden Extraktionsmittels, z.B. der Schwefelsäure, mit der vorgewärmten, teilverdampften aufzukonzentrierenden Salpetersäure gewährleistet.

Um den erforderlichen Heizenergiebedarf für die Rückkonzentrierung des Extraktionsmittels (z.B. Schwefelsäure oder auch wässrige Magnesiumnitratlösungen) möglichst gering zu halten, sollte die Wassermenge, die in der Rückkonzentrierung abgedampft werden muß, möglichst gering sein. Da der bei den herkömmlichen Verfahren eingeblasene Direktdampf die ablaufende Schwefelsäure verdünnt, wird erfindungsgemäß eine möglichst vollständige indirekte Beheizung der Salpetersäure-Rektifikation angestrebt, zu welchem Zweck die Kolonnen zur Extraktivrektifikation mit Sumpfheizern und/oder Mittelheizern ausgerüstet werden.

Das sind an sich bereits bekannte Maßnahmen. Neu ist jedoch, daß die Gestaltung des liegenden Verdampfers W4, unterhalb der Kolonne K1.1, vorzugsweise so erfolgt, daß ergänzende Trennstufen und damit eine Verringerung der Kolonnenhöhe und/oder eine Verminderung der Wärmezufuhr im Sumpf der Kolonne K1.1 und/oder eine Verminderung des Rest-Salpetersäuregehalts in dem ablaufenden Extraktionsmittel erreicht wird. Dazu wird bei W4 vorzugsweise ein liegender Verdampfer verwendet, in dem im Bodenbereich quer zur Flußrichtung des Extraktionsmittels Wehre eingebaut sind, die ein kaskadenartiges Kammersystem von Destillationsblasen bilden. Ein geeigneter derartiger Verdampfer ist z.B. in der Firmenschrift der Anmelderin zur Schwefelsäurekonzentrierung gezeigt.

Durch Einblasen einer bestimmten Menge Luft und/oder Wasserdampf in den liegenden Verdampfer W4 (Fig. 2 und 4), vorzugsweise in das Extraktionsmittel und dabei vorzugsweise im hinteren Bereich bzw. am Ende des liegenden Verdampfers W4, kann die Konzentration der Salpetersäure in dem ablaufenden Extraktionsmittel zusätzlich vermindert werden und/oder bei Beibehalten des erhöhten Rest-Salpetersäuregehaltes in dem ablaufenden Extraktionsmittel kann die zuzuführende Energiemenge und/oder die erforderliche Höhe der Kolonne K1.1 vermindert werden. Als zusätzlich eingeblasener Wasserdampf (Strippdampf) wird dabei vorzugsweise Entspannungsdampf des aus den Heizern der Gesamtanlage anfallenden Heizdampfkondensats genutzt.

Zur Durchführung der Extraktivrektifikation kann auch eine einzige Kolonne K1 (in den Figuren nicht gezeigte Alternative) eingesetzt werden, wenn die teilverdampfte aufzukonzentrierende Salpetersäure in einem Seitengefäß in eine flüssige und eine dampfförmige Phase getrennt wird und der Flüssigkeitsstrom oberhalb des Dampfstroms in die einzige Kolonne K1 eingespeist wird.

Unabhängig von der Durchführung der Extraktivrektifikation in einer einzelnen Kolonne K1 oder zwei separaten Kolonnen oder Kolonnenabschnitten K1.0 und K1.1 besteht eine entscheidende Neuerung des erfindungsgemäßen Verfahrens darin, daß der wesentliche Teil des Wasserdampfes, der in der eingespeisten teilweise verdampften aufzukonzentrierenden Salpetersäure enthalten ist, im Stoffaustausch gegen zu verdampfende Salpetersäure kondensiert wird. Aufgrund dieses Austauschs wird der Rücklauf vermindert, so daß die erforderliche Wärmezufuhr verringert wird.

Zur innigen Durchmischung des herabrieselnden Extraktionsmittels und des eintretenden Feedstromes werden die bereits oben kurz erwähnten Einbauten in K1.0 so ausgeführt, daß ein innenliegender und/oder außenliegender Heizer Anwendung findet, der die innige Durchmischung noch verstärkt.

Zusätzlich kann eine Verminderung des Heizenergiebedarfes dadurch erzielt werden, daß gemäß einer bevorzugten Ausführungsform ein erhöhter Restsalpetersäuregehalt von bis zu etwa 5 Gew.-% HNO₃ im Extraktionsmittel (z.B. Schwefelsäure) zugelassen wird, das aus dem liegenden Verdampfer W4 austritt. Zur Vermeidung eines erhöhten Salpetersäuregehaltes im Brüdenkondensat der Extraktionsmittelrückkonzentrierung wird das mit bis zu ca. 5 Gew.-% HNO₃ ablaufende Extraktionsmittel, z.B. die Schwefelsäure, in einer vorgeschalteten Vakuumstufe B2 (Fig. 5) entspannt, und die in den Brüden dieser Stufe enthaltene Salpetersäure wird durch eine nachgeschaltete Rektifikationkolonne K5 zurückgehalten und als unterazeotrope Salpetersäure bevorzugt in die Kolonne K1.0 zurückgegeben (Fig.5).

Zusätzlich kann weiterhin Energie eingespart werden, wenn die Kolonnen K1.0 und K1.1 bei unterschiedlichen Drücken betrieben werden. Mögliche Betriebsdrücke für die Extraktivrektifikation liegen bei 100 mbar absolut bis ca. 5 bar absolut, vorzugsweise zwischen 200 mbar absolut und 1,3 bar absolut. Für die Extraktionsmittelrückkonzentrierung, z.B. für Schwefelsäure, liegen die zweckmäßigen Betriebsdrücke bei 30 mbar absolut bis ca. 4 bar absolut. Durch Ausnutzung sinnvoller Betriebsdrücke in den Einzelbereichen wird eine Wärmenutzung (Entspannungsverdampfung, Heizung mit Brüden) möglich.

Im Rahmen des erfindungsgemäßen Verfahrens sind dabei folgende fakultativen weiteren Energieausnutzungsmaßnahmen möglich:
a) Die Kolonne K1.1 wird mit einem wesentlich kleineren Druck als die Kolonne K1.0 betrieben (Fig. 4). Dadurch kann die latente Wärme des Salpetersäure - Extraktionsmittelgemisches zwischen der Sumpftemperatur der Kolonne K1.0 und der Siedetemperatur des Gemisches am Kopf der Kolonne K1.1 genutzt werden, und zum Austreiben der Rest-Salpetersäure ist weniger Dampf/Wasserdampf im Sumpf der Kolonne K1.1 erforderlich.
b) Ergänzend oder alternativ ist vorgesehen, die Rückkonzentrierung des Extraktionsmittels, z.B. der Schwefelsäure, in zwei oder mehreren Druckstufen, bevorzugt im Bereich von 50 mbar absolut bis 4 bar absolut, durchzuführen, wobei die Brüden aus der/den Stufe(n) mit dem höheren Druck, wie bereits oben erwähnt, zur Beheizung der Extraktivrektifikation verwendet werden.
c) Ergänzend oder alternativ ist vorgesehen, daß die Brüden aus der/den Stufe(n) höheren Drucks der Extraktionsmittelrückkonzentrierung (Fig.3; Fig.5) vor oder nach der Beheizung der Extraktivrektifikation in einer oder mehreren separaten Kolonnen in überwiegend Wasser mit einer Konzentration größer als 90 Gew.-%, bevorzugt 99-99,99 Gew.-%; und unterazeotrope Salpetersäure, bevorzugt mit einer Konzentration von 30-69 Gew.-%, aufgetrennt werden, wobei die unterazeotrope Salpetersäure bevorzugt in die Kolonne K1.0 zurückgegeben wird.

Zur Reduzierung der Anlagenherstellkosten und gegebenenfalls aus Platzgründen wird ferner vorzugsweise ein Teilstrom der aus dem Kopf der Kolonne K1.0 austretenden Salpetersäurebrüden im Wärmeübertrager W5 und/oder mittels eines weiteren Kondensators W6 vor dem Eintritt in die Bleichkolonne K2 kondensiert, und das erhaltene Kondensat wird am Kopf der Bleichkolonne K2 aufgegeben. Der für die Beheizung der Bleichkolonne K2 erforderliche nicht kondensierte Teil der Salpetersäurebrüden wird in den Mittelteil der Bleichkolonne K2 eingeleitet. Dadurch ist es möglich, den oberen Teil der Bleichkolonne K2 gegenüber bisherigen Verfahren im Durchmesser wesentlich zu verringern.

Zusammenfassend sollen noch einmal folgende Vorteile der Erfindung hervorgehoben werden:

Das erfindungsgemäße Verfahren ermöglicht es, daß der Rücklauf in der Extraktivrektifikationskolonne vermindert wird.

Zur weiteren Verminderung des internen Rücklaufes kann das Extraktionsmittel wärmer aufgegeben werden.

Durch die Nutzung des Wärmeinhaltes der zur Verfügung stehenden Prozeßströme, mit denen eine Teilverdampfung der aufzukonzentrierenden Salpetersäure erreicht wird, muß weniger Heizenergie aufgewandt werden.

Die Reinheit des Extraktionsmittels kann durch die Verwendung eines liegenden Verdampfers (W4) einer geeigneten Bauweise leichter erreicht werden.

Bei den bisherigen Salpetersäurekonzentrierungsanlagen sind Heizdampfmengen von ca. 1,8 kg pro 1,0 kg erzeugte hochkonzentrierte Salpetersäure erforderlich. Wird, wie bereits bekannt, mit Sumpfheizer und/oder Mittelheizer gearbeitet, so vermindert sich der spezifische Heizdampfbedarf auf ca. 1,5 kg pro kg hochkonzentrierte HNO₃. Bei dem erfindungsgemäßen Verfahren kann der spezifische Heizdampfbedarf auf unter 1,1 kg pro kg hochkonzentrierte HNO₃ vermindert werden. Die Aussagen zum spezifischen Heizenergiebedarf gelten dabei für ca. 67 gew.-%ige aufzukonzentrierende Salpetersäure bei Erzeugung einer ca. 99 gew.-%igen Salpetersäure.

Der Kühlwasserbedarf vermindert sich in etwa im gleichen Verhältnis wie der Heizdampfbedarf.

Schließlich können die Apparate teilweise kleiner ausgebildet werden und/oder bei etwa gleichen Apparategrößen können höhere Durchsätze erzielt werden als bei herkömmlichen Verfahren.

Da das erfindungsgemäße Verfahren, das im Zusammenhang mit der Herstellung einer hochkonzentrierten Salpetersäure entwickelt wurde, in seinem Kern eine Optimierung der Energieausnutzung bei der Trennung azeotroper Gemische betrifft, kann es ferner unter fachmännischer Anpassung der einschlägigen Verfahrensparameter ohne grundsätzliche Probleme auch als Verfahren zur Trennung anderer technischer azeotroper Stoffgemische durchgeführt werden, bei denen eine konzentrierte Produktfraktion von einem der Bestandteile der Ausgangsmischung hergestellt werden soll, wenn dabei der azeotrope Punkt durch Zugabe eines geeigneten Extraktionsmittels umgangen/überwunden werden kann. Typische Beispiele für derartige Stoffgemische sind Halogenwasserstoffe/Wasser, insbesondere Chlor- oder Fluorwasserstoff/Wasser; Alkohole/Wasser, insbesondere Ethanol/Wasser oder Isopropanol/Wasser; Ether/Wasser, z.B. Tetrahydrofuran/Wasser; oder Gemische organischer Verbindungen, z.B. Benzol/Cyclohexan. Auch bei derartigen Gemischen kann das erfindungsgemäße Verfahren erfolgreich und ökonomisch zur Anwendung kommen. Die Erfindung betrifft daher auch ein Verfahren zur Azeotroptrennung in allgemeinerer Form mit den Grundmerkmalen, die in Anspruch 22 wiedergegeben werden. Die vorteilhaften Ausgestaltungen des verallgemeinerten Verfahrens entsprechen den vorteilhaften Ausgestaltungen gemäß den Patentansprüchen 2 bis 19, soweit die darin enthaltenen Merkmale, wie die meisten konkreten Temperaturangaben, nicht rein stoffbezogen sind und in der angegebenen Form nur für die Konzentrierung von Salpetersäure bzw. die Verwendung des Extraktionsmittels Schwefelsäure sinnvoll sind.

## Patentansprüche

1. Verfahren zur Herstellung einer Salpetersäure einer Konzentration von 75 bis 99,9% aus einer verdünnteren, gegebenenfalls verunreinigten Salpetersäure, bei dem man eine Salpetersäure einer Konzentration von etwa 45 bis 70% im Kontakt mit einem flüssigen Extraktionsmittel zur Verhinderung der Bildung eines Salpetersäure-Wasser-Azeotrops bei Überdruck und/oder Normaldruck und/oder Vakuum rektifiziert, die Dämpfe der konzentrierten Salpetersäure kondensiert und eine konzentrierte Salpetersäure gewinnt und bei dem man außerdem das Extraktionsmittel unter Rückkonzentrierung aufarbeitet und in die Extraktivrektifikation zurückführt,
**dadurch gekennzeichnet, daß** man
- den Wärmeinhalt der im Gesamtverfahren zur Verfügung stehenden Prozeßströme teilweise oder weitgehend ausnutzt und
- die aufzukonzentrierende Salpetersäure unter Ausnutzung der im Gesamtverfahren zur Verfügung stehenden Wärmemengen (W1, W2, W5) als siedende Flüssigkeit oder teilweise verdampft als Dampf-Flüssigkeits-Gemisch oder in Dampf und Flüssigkeit getrennt in die Extraktivrektifikation einspeist und
- mindestens 50% der Extraktionsmittelmenge vor seiner Einspeisung in die Extraktivrektifikation mit Salpetersäure, vorzugsweise einer Salpetersäure im Konzentrationsbereich der aufzukonzentrierenden Salpetersäure, in einer Menge von 0,1 bis 60 % der aufzukonzentrierenden Salpetersäure, anreichert und
- die erforderliche Energie der Extraktivrektifikation ausschließlich oder zum überwiegenden Teil durch indirekte Beheizung (W4, W8) zuführt und
- das Extraktionsmittel in möglichst konzentrierter Form der Extraktivrektifikation zuführt, so daß bei gleichzeitig möglichst großer Verdünnung des aus der Extraktivrektifikation ablaufenden Extraktionsmittels die Kreislaufmenge an Extraktionsmittel minimiert wird.

2. Verfahren gemäß Anspruch 1, **dadurch gekennzeichnet, daß** man die Extraktivrektifikation in zwei separaten Kolonnen (K1.0, K1.1) oder in einer in zwei Kolonnenabschnitte (K1.0, K1.1) aufgeteilten Konzentrierkolonne durchführt, wobei die erste der beiden Kolonnen (K1.0) der Rektifikation der aufzukonzentrierenden Salpetersäure und Gewinnung eines Dampfes der konzentrierten Salpetersäure dient und die zweite der beiden Kolonnen (K1.1) der Abtrennung der Salpetersäure aus dem Extraktionsmittel dient, wobei die Aufteilung in die beiden Kolonnen (K1.0, K1.1) durch die Einspeisestelle für die aufzukonzentrierende Salpetersäure erfolgt.

3. Verfahren gemäß Anspruch 1 und 2, **dadurch gekennzeichnet, daß** man
- die aufzukonzentrierende Salpetersäure dem Unterteil der ersten der beiden Kolonnen (K1.0) in vorerhitzter Form als siedende Flüssigkeit oder als Dampf-Flüssigkeits-Gemisch oder getrennt in Dampf und Flüssigkeit zuführt, indem man den Wärmeinhalt von Prozeß-, Heizdampf- und/oder Heizdampfkondensatströmen des Gesamtverfahrens zur Vorerhitzung nutzt, und in der Kolonne (K1.0) im Gegenstrom mit einem flüssigen Extraktionsmittel rektifiziert, das vor seiner Einspeisung in die erste Kolonne (K1.0) soweit mit Salpetersäure angereichert wurde, daß beim Kontakt des erzeugten Dampfes der konzentrierten Salpetersäure mit dem Extraktionsmittel die Kondensation von Salpetersäure minimiert wird,
- das Extraktionsmittel aus dem unteren Teil der ersten Kolonne (K1.0) abzieht und dem Kopf der zweiten der beiden Kolonnen (K1.1) zuführt und in dieser in eine Extraktionsmittelflüssigkeit mit einem geringen Salpetersäure-Restgehalt und einen Salpetersäuredampf auftrennt,
- wobei sich die Extraktionsmittelflüssigkeit in einem indirekt beheizten Sumpf der zweiten Kolonne (K1.1) sammelt und aus diesem zur Aufarbeitung und Rückkonzentrierung abgezogen wird und
- der aus der Extraktionsmittelflüssigkeit ausgetriebene Salpetersäuredampf vom Kopf der zweiten Kolonne (K1.1) in den unteren Teil der ersten Kolonne (K1.0) zurückgeführt wird.

4. Verfahren nach Anspruch 1, 2 oder 3, **dadurch gekennzeichnet, daß** man die aufzukonzentrierende Salpetersäure durch Wärmeaustausch mit dem aus der ersten Kolonne (K1.0) gewonnenen konzentrierten Salpetersäuredampf (W5) und/oder dem heißen rückkonzentrierten Extraktionsmittel (W1) und/oder einem Heizdampfkondensat und/oder einer Entspannungsdampf eines Heizdampfkondensats (W2) aus den indirekt beheizten Verdampfern (W4, W10) der Extraktivrektifikation und/oder der Extraktionsmittelkonzentrierung und/oder den bei der Rückkonzentrierung des Extraktionsmittels erhaltenen Dampffraktionen vorerhitzt und/oder teilweise verdampft.

5. Verfahren nach Anspruch 1 bis 4, **dadurch gekennzeichnet, daß** die Konzentrierstufen in den beiden Kolonnen (K1.0 und K1.1) bei einem gleichen oder unterschiedlichen Systemdruck im Bereich von 100 mbar absolut bis 5 bar absolut, vorzugsweise zwischen 200 mbar absolut und 1,3 bar absolut betrieben werden.

6. Verfahren nach Anspruch 1 bis 5, **dadurch gekennzeichnet, daß** man die zweite Kolonne (K1.1) bei einem niedrigeren Druck betreibt als die erste Kolonne (K1.0).

7. Verfahren nach einem der Ansprüche 1 bis 6, **dadurch gekennzeichnet, daß** man als Extraktionsmittel konzentrierte Schwefelsäure verwendet und mindestens 50% dieser Schwefelsäuremenge vor ihrer Einspeisung in die erste Kolonne (K1.0) mit einer Salpetersäure im Konzentrationsbereich der aufzukonzentrierenden Salpetersäure in einer Menge von 0,1 bis 60 % der aufzukonzentrierenden Salpetersäure anreichert.

8. Verfahren nach einem der Ansprüche 1 bis 7, **dadurch gekennzeichnet, daß** man das sich im Sumpf der zweiten Kolonne (K1.1) sammelnde Extraktionsmittel in einem liegender Verdampfer (W4) erhitzt, der indirekt beheizt wird und in seinem Bodenbereich quer zur Flußrichtung der Säure Wehre aufweist, die ein kaskadenartiges Kammersystem von einzelnen Destillationsblasen bilden, so daß der Verdampfer zusätzliche Trennstufen bereitstellt, die eine Verringerung der Höhe der zweiten Kolonne (K1.1) und/oder eine Verringerung des Heizenergiebedarfes für den liegenden Verdampfer (W4) und/oder die Einstellung einer geringeren Salpetersäure-Restkonzentration in der aus dem liegenden Verdampfer ablaufenden Extraktionsmittelflüssigkeit ermöglichen.

9. Verfahren nach Anspruch 8, **dadurch gekennzeichnet, daß** man zur weiteren Verringerung des Salpetersäure-Restgehaltes in dem aus der zweiten Kolonne (K1.1) ablaufenden Extraktionsmittel Luft und/oder Wasserdampf in den liegenden Verdampfer (W4) einbläst.

10. Verfahren nach Anspruch 7, **dadurch gekennzeichnet, daß** man das Extraktionsmittel Schwefelsäure in die erste Kolonne (K1.0) mit einer Temperatur im Bereich von 80°C bis 160°C einspeist.

11. Verfahren nach einem der Ansprüche 1 bis 10, **dadurch gekennzeichnet, daß** die Einspeisung der teilverdampften Salpetersäure in die erste und/oder zweite Kolonnen (K1.0, K1.1) der Konzentrierung derart erfolgt, daß eine innige Durchmi-schung des Dampfanteils der teilverdampften aufzukonzentrierenden Salpetersäure mit dem eingespeisten Extraktionsmittel und/oder mit einem Gemisch aus dem Extraktionsmittel und dem Flüssigkeitsanteil der teilverdampften aufzukonzentrierenden Salpetersäure gewährleistet ist, wobei diese innige Durchmischung durch geeignete Aggregate bzw. Einbauten, die innerhalb der Kolonnen (K1.0, K1.1) und/oder auch außerhalb davon angeordnet sind, verstärkt werden kann.

12. Verfahren nach einem der Ansprüche 1 bis 11, **dadurch gekennzeichnet, daß** das aus dem liegenden Verdampfer (W4) der zweiten Kolonne (K1.1) abgezogene Extraktionsmittel einen Gehalt an Rest-Salpetersäure von bis zu 5 Gew.-% aufweist.

13. Verfahren nach Anspruch 12, **dadurch gekennzeichnet, daß** das Extraktionsmittel bei einem Gehalt an Rest-Salpetersäure im Bereich von 0,1 bis 5 Gew.-% in einer Vakuumstufe einer Entspannungsverdampfung unterzogen wird und die in dem so erhaltenen Dampf beinhaltete Salpetersäure zurückgehalten und als verdünnte Salpetersäure in eine vorausgehende Verfahrensstufe, vorzugsweise in die erste Kolonne (K1.0), zurückgeführt wird, während das bezüglich seines Salpetersäureanteils abgereicherte flüssige Extraktionsmittel einer weiteren Aufarbeitung zu seiner Rückkonzentrierung unterworfen wird.

14. Verfahren nach einem der Ansprüche 1 bis 13, **dadurch gekennzeichnet, daß** die Rückkonzentrierung des Extraktionsmittels in zwei oder mehreren Stufen bei unterschiedlichen Drucken im Bereich von 50 mbar absolut bis 4 bar absolut durchgeführt wird und die Dampffraktionen aus dieser Rückkonzentrierung mit höherem Druck dazu genutzt werden, die aufzukonzentrierende Salpetersäure zu erhitzen und/oder die Extraktivrektifikationskolonne (K1.1) indirekt (W4) zu beheizen.

15. Verfahren gemäß Anspruch 14, **dadurch gekennzeichnet, daß** die Dampffraktionen vor oder nach ihrer Verwendung zur Vorerhitzung der aufzukonzentrierenden Salpetersäure in einer oder mehreren zusätzlichen Kolonnen in eine im wesentlichen aus Wasser bestehende Fraktion, die aus vorzugsweise 99 bis 99,99 Gew.-% Wasser besteht, und in unterazeotrope Salpetersäure aufgetrennt werden, die in eine vorausgehende Verfahrensstufe, vorzugsweise in die erste Kolonne (K1.0), zurückgeführt wird.

16. Verfahren nach einem der Ansprüche 1 bis 15, **dadurch gekennzeichnet, daß** der aus der ersten Kolonne (K1.0) erhaltene Dampf der konzentrierten Salpetersäure durch Wärmeaustausch mit der aufzukonzentrierenden Salpetersäure (W5) wenigstens teilweise kondensiert wird und die ggf. nach Durchlaufen weiterer Kondensatoren (W6) erhaltene flüssige konzentrierte Salpetersäure auf den Kopf einer Bleichkolonne (K2) aufgegeben wird, während der erforderliche restliche Salpetersäuredampf dem Mittelteil dieser Bleichkolonne (K2) zugeführt wird.

17. Verfahren gemäß Anspruch 3, **dadurch gekennzeichnet, daß** das Heizdampfkondensat, das zur Vorerhitzung der aufzukonzentrierenden Salpetersäure mitverwendet wird, ein hochgespanntes Heizdampfkondensat von vorher zur indirekten Beheizung genutztem Heizdampf, insbesondere aus der indirekten Beheizung der beiden Kolonnen (K1.0, K1.1), mit einem Druck von 6 bis 40 bar Überdruck und/oder der Entspannungsdampf eines solchen Heizdampfkondensates und/oder ein Gemisch aus Heizdampfkondensat und Entspannungsdampf mit einem Druck im Bereich von 1 bis 16 bar Überdruck ist.

18. Verfahren gemäß Anspruch 9, **dadurch gekennzeichnet, daß** der in den liegenden Verdampfer (W4) und/oder in die zweite Kolonne (K1.1) als Strippdampf eingespeiste Wasserdampf ein durch Entspannung eines Heizdampfkondensats gewonnener Wasserdampf ist.

19. Verfahren gemäß Anspruch 1 oder 2, **dadurch gekennzeichnet, daß** man die Extraktivrektifikation in einer einzigen Kolonne durchführt, wobei die teilweise verdampfte aufzukonzentrierende Salpetersäure in die dampfförmige und die flüssige Phase aufgetrennt in die Kolonne eingespeist wird, wobei die dampfförmige Phase unterhalb der Aufgabestelle für die flüssigen Phase eingeleitet wird.

20. Anlage zur Durchführung eines Verfahrens zur Herstellung einer konzentrierten Salpetersäure nach einem der Ansprüche 1 bis 19, **dadurch gekennzeichnet, daß** die Konzentrierkolonne in zwei Kolonnen (K0, K1) aufgeteilt ist, die in Form zweier getrennter Kolonnen oder zweier voneinander getrennter Abschnitte einer einzige Kolonne vorliegen, wobei
- die erste der beiden Kolonnen (K1.0) mit mindestens einer Zuleitung für die zu konzentrierende Salpetersäure sowie mindestens einer darüber im Kopfteil der Kolonne (K1.0) angeordneten Zuleitung für Extraktionsmittelflüssigkeit, der vorzugsweise ein Teil der aufzukonzentrierenden Salpetersäure beigemischt wurde, sowie mit einer Abzugsleitung für verdünntes flüssiges Extraktionsmittelgemisch aus dem Sumpfteil der Kolonne (K1.0) versehen ist und
- der Kopf der zweiten Kolonne (K1.1) mit der Leitung des verdünnten flüssigen Extraktionsmittelgemischs, das aus der ersten Kolonne abgezogen wurde, verbunden ist und die zweite Kolonne (K1.1) außerdem an ihrem unteren Ende mit einem indirekt beheizten liegenden Verdampfer (W4) versehen ist, aus dem das Extraktionsmittel zur Regeneration einer Rückkonzentriereinheit zugeleitet werden kann, während am Kopf der zweiten Kolonne (K1.1) ferner eine Abzugsleitung für die Rückführung von Salpetersäuredämpfen, die in der zweiten Kolonne (K1.1) aus dem verdünnten Extraktionsmittelgemisch ausgetrieben wurden, in die erste Kolonne (K1.0) vorgesehen ist.

21. Anlage nach Anspruch 20, **dadurch gekennzeichnet, daß** die Zuleitung für die zu konzentrierende Salpetersäure durch wenigstens einen Wärmeaustauscher (W5) geführt wird, in dem ein Wärmeaustausch mit wenigstens einem heißen Produktstrom des Verfahrens, vorzugsweise dem Strom der dampfförmigen konzentrierten Salpetersäure aus der ersten Kolonne, erfolgt, und daß ein Mischer vorgesehen ist, in dem dem der ersten Kolonne (K1.0) zugeführten Extraktionsmittel eine kontrollierte Menge der zu konzentrierenden Salpetersäure zugemischt wird.

22. Verfahren zur Herstellung einer konzentrierten Produktfraktion aus einem mindestens ein Azeotrop bildenden flüssigen Stoffgemisch, insbesondere zur Abtrennung von hochkonzentrierten flüchtigen Produkten aus verdünnten wasserhaltigen Stoffgemischen oder zur Auftrennung von Gemischen organischer Verbindungen, bei dem man das Stoffgemisch durch Extraktivrektifikation im Kontakt mit einem flüssigen Extraktionsmittel zur Verhinderung der Bildung eines Azeotrops bei Überdruck und/oder Normaldruck und/oder Vakuum rektifiziert, die Dämpfe der konzentrierten Produktfraktion kondensiert und das konzentrierte Produkt gewinnt, und bei dem man außerdem das Extraktionsmittel unter Rückkonzentrierung aufarbeitet und in die Extraktivrektifikation zurückführt,
**dadurch gekennzeichnet, daß** man
- den Wärmeinhalt der im Gesamtverfahren zur Verfügung stehenden Prozeßströme teilweise oder weitgehend ausnutzt,
- das aufzukonzentrierende Stoffgemisch unter Ausnutzung der im Gesamtverfahren zur Verfügung stehenden Wärmemengen (W1, W2, W5) als siedende Flüssigkeit oder teilweise verdampft als Dampf-Flüssigkeits-Gemisch oder in Dampf und Flüssigkeit getrennt in die Extraktivrektifikation einspeist,
- mindestens 50% der Extraktionsmittelmenge vor seiner Einspeisung in die Extraktivrektifikation mit einem Teil des Stoffgemischs oder dem als Konzentrat zu gewinnenden Produkt in einer Menge von 0,1 bis 60 % des aufzukonzentrierenden Stoffgemischs anreichert,
- die erforderliche Energie der Extraktivrektifikation ausschließlich oder zum überwiegenden Teil durch indirekte Beheizung (W4, W8) zuführt und
- das Extraktionsmittel in möglichst konzentrierter Form in die Extraktivrektifikation einleitet, so daß bei gleichzeitig möglichst großer Verdünnung des aus der Extraktivrektifikation ablaufenden Extraktionsmittels die Kreislaufmenge an Extraktionsmittel minimiert wird.

## Claims

1. Process for the production of a nitric acid having a concentration of 75 to 99.9 % from a more diluted, optionally impure nitric acid, wherein a nitric acid of a concentration of about 45 to 70 % is rectified above hyperbaric pressure and/or at normal pressure and/or under vacuum by contacting it with a liquid extraction medium for preventing the formation of a nitric acid-water azeotropic mixture, the vapors of the concentrated nitric acid are condensed and a concentrated nitric acid is obtained, and wherein, additionally, the extraction medium is recovered by reconcentration and returned to the extractive rectification, **characterized in**
- partially or substantially utilizing the heat contents of the available process streams of the entire process and
- feeding the nitric acid to be concentrated in the form of a boiling liquid or partially vaporized or separated into vapor and liquid into the extractive rectification, utilizing the heat contents available in the entire process (W1, W2, W5), and
- enriching at least 50 % of the amount of extraction medium before feeding it into the extractive rectification in an amount of 0.1 to 60 % of the nitric acid to be concentrated with nitric acid, preferably a nitric acid in the concentration range of the nitric acid to be concentrated, and
- supplying the energy required for the extractive rectification exclusively, or to a substantial proportion thereof by indirect heating (W4, W8) and
- supplying the extraction medium to the extractive rectification in a form as concentrated as possible, such that when at the same time the extraction medium leaving the extractive distillation is as diluted as possible, the circulating amount of extraction medium is minimized.

2. Process according to claim 1, **characterized in that** the extractive rectification is carried out in two separate columns (K1.0, K1.1) or in one concentration column which is partitioned into two column portions (K1.0, K1.1), wherein the first of the two columns (K1.0) is utilized for the rectification of the nitric acid to be concentrated and for obtaining a concentrated nitric acid vapor, and the second of the two columns (K1.1) is utilized for the separation of the nitric acid from the extraction medium, the partitioning into two columns (K1.0, K1.1) being defined by the feeding location for the nitric acid to be concentrated.

3. Process according to claim 1 and 2, **characterized in that**
- the nitric acid to be concentrated is introduced into a lower part of the first of the two columns (K1.0) in preheated form as a boiling liquid or as a vapor-liquid mixture or separated into vapor and liquid utilizing the heat content of process streams, heating steam and/or steam condensate from the entire process for pre-heating, and rectified in the first column (K1.0) in countercurrent flow with a fluid extraction medium, which prior to its introduction into the first column (K1.0) was enriched with nitric acid to such a point that when vapors of the concentrated nitric acid are contacted with the extraction medium the condensation of nitric acid is minimized,
- the extraction medium from the lower part of the first column (K1.0) is drawn off and supplied to the head of the second of the two columns (K1.1) and separated therein into an extraction medium fluid having a reduced residual content of nitric acid and into a nitric acid vapor,
- the extraction medium liquid being collected in an indirectly heated bottom of the second column (K1.1) and drawn off therefrom for recovering and reconcentration and
- the nitric acid vapor driven off from the extraction medium being returned from the head of the second column (K1.1) into the lower part of the first column (K1.0).

4. Process according to claim 1, 2 or 3, **characterized in that** the nitric acid to be concentrated is preheated and/or partially vaporized by heat exchange with the concentrated nitric acid vapor (W5) from the first column (K1.0) and and/or the hot reconcentrated extraction medium (W1) and/or a heating steam condensate and/or a flash vapor of a heating steam condensate (W2) from the indirectly heated vaporizers (W4, W10) of the extractive rectification and/or the extraction medium concentration and/or the vapor fractions of extraction medium obtained at its reconcentration.

5. Process according to claim 1 to 4, **characterized in that** the concentration steps in the two columns (K1.0 and K1.1) are operated at the same or different system pressures in the range of 100 mbar absolute to 5 bar absolute, preferably between 200 mbar absolute and 1.3 bar absolute.

6. Process according to claim 1 to 5, **characterized in that** the second column (K1.1) is operated at a lower pressure than the first column (K. 1.0).

7. Process according to any one of claims 1 to 6, **characterized in that** as extraction medium sulfuric acid is utilized and that prior to feeding it into the first column (K1.0), at least 50 % of the amount of sulfuric acid is enriched in an amount from 0.1 to 60 % of the nitric acid to be concentrated with a nitric acid in a concentration range of the nitric acid to be concentrated

8. Process according to any one of claims 1 to 7, **characterized in that** the extraction medium collected in the bottom of the second column (K1.1) is heated in a horizontal vaporizer (W4), which is heated indirectly and in its bottom portion transversely to the flow direction of the acid is provided with weirs forming a cascading-type chamber system of single distillation vessels, so that the vaporizer provides additional separation steps, by which a reduction of the height of the second column (K1.1) and/or a reduction of the heating energy requirements for the horizontal vaporizer (W4) and/or an adjustment of reduced residual nitric acid concentrations in the extraction medium flowing out off the horizontal vaporizer are achievable.

9. Process according to claim 8, **characterized in that** for a further reduction of the residual content of nitric acid in the extraction medium leaving the second column (K1.1), air and/or water steam is blown into the horizontal vaporizer (W4).

10. Process according to claim 7, **characterized in that** the extraction medium sulfuric acid is fed into the first column (K1.0) at a temperature in the range from 80°C to 160°C.

11. Process according to any one of claims 1 to 10, **characterized in that** the introduction of the partially vaporized nitric acid into the first and/or second column (K1.0, K1.1) of the concentration is effected in such a manner that an intimate mixture of the vapor portion of the partially vaporized nitric acid to be concentrated and the introduced extraction medium and/or a mixture of the extraction medium and the liquid portion of the partially vaporized liquid nitric acid to be concentrated is provided, whereby the intimate mixing can be amplified by suitable aggregates and devices respectively which are disposed interiorly and/or exteriorly of the columns (K1.0, K1.1).

12. Process according to one of the claims 1 to 11, **characterized in that** the extraction medium drawn off from the horizontal vaporizer (W4) of the second column (K1.0) has a residual nitric acid content of up to 5 % by weight.

13. Process according to claim 12, **characterized in that** the extraction medium having a content of residual nitric acid in the range of 0.1 to 5 % by weight is subjected to a flash vaporization in a vacuum step and the nitric acid from the vapor so obtained is retained as a diluted nitric acid and returned to an upstream process step, preferably to the first column (K1.0), while the liquid extraction medium depleted with respect to its nitric acid portion is subjected to a further processing for its reconcentration.

14. Process according to one of claims 1 to 13, **characterized in that** the reconcentration of the extraction medlum is carried out in two or more steps at varying pressures in the range from 50 mbar absolute to 4 bar absolute and the vapor fractions of this reconcentration with the higher pressure are utilized to heat the nitric acid to be concentrated and/or the extractive rectification column (K1.1) indirectly (W4).

15. Process according to claim 14, **characterized in that** before or after utilizing the vapor fractions for preheating the nitric acid to be concentrated they are separated in one or several additional columns into a fraction preferably consisting of water, preferably 99 to 99.99% by weight water, and into a subazeotropic nitric acid, which is returned into an upstream process step, preferably to the first column (K1.0).

16. Process according to one of claims 1 to 15, **characterized in that** the vapor of concentrated nitric acid obtained from the first column (K1.0) is at least partially condensed by heat exchange with the nitric acid to be concentrated (W5) and that the liquid concentrated nitric acid obtained, optionally after passing further condensers (W6), is supplied to the head of a bleaching column (K2), while the required residual nitric acid vapor is returned to the mid-portion of this bleaching column (K2).

17. Process according to claim 3, **characterized in that** the steam condensate utilized in the preheating of the nitric acid to be concentrated is a high pressure heating steam condensate of steam previously utilized for indirect heating, in particular from the indirect heating of the two columns (K1.0, K1.1), having a pressure of 6 to 40 bar hyperbaric pressure, and/or the flash vapor of such a heating steam condensate and/or a mixture of heating steam condensate and flash vapor having a pressure in the range of from 1 to 16 bar hyperbaric pressure.

18. Process according to claim 9, **characterized in that** the steam supplied to the horizontal vaporizer (W4) and/or into the second column (K1.1) as stripping vapor is a steam obtained from flashing a heating steam condensate.

19. Process according to claim 1 or 2, **characterized in that** the extractive rectification is carried out in a single column, wherein the partially vaporized nitric acid to be concentrated is fed into the column separated into the vapor phase and the liquid phase, the vapor phase being introduced below the feeding point for the liquid phase.

20. Installation for carrying out a process for producing a concentrated nitric acid according to any one of claims 1 to 19, **characterized in that** the concentration column is divided into two columns (K0, K1), which are provided in the form of two separate columns or as one single column partitioned into two separate portions, wherein
- the first of the two columns (K1.0) is provided with at least one feeding line for the nitric acid to be concentrated as well as at least one feeding line disposed above in the head portion of the column (K1.0) for extraction medium liquid, to which preferably a part of the nitric acid to be concentrated was admixed, and a line for drawing off diluted liquid extraction medium mixture from the bottom portion of the column (K1.0) and
- the head of the second column (K1.1) is connected with the line for the diluted liquid extraction medium mixture drawn off from the first column, and the second column (K1.1) further is provided at a lower end thereof with a horizontal vaporizer (W4) which is indirectly heated and from which the extraction medium is transferred for regenerating to a reconcentration unit, while at the head of the second column (1.1) there is further provided an effluent line for returning nitric acid vapors driven off in the second column (K1.1) from the diluted extraction medium mixture into the first column (K. 1.0).

21. Installation according to claim 20, **characterized in that** the feeding line for the nitric acid to be concentrated is conducted through at least one heat exchanger (W5) in which a heat exchange with at least one hot product stream of the process, preferably the stream of the vaporized concentrated nitric acid from the first column, is effected, and that a mixer is provided in which to the extraction medium supplied to the first column (K1.0) a controlled amount of the nitric acid to be concentrated is admixed.

22. Process for producing a concentrated product fraction from a liquid mixture of materials forming at least one azeotropic mixture, in particular for the removal of highly concentrated volatile products from diluted aqueous mixtures of materials or for separating mixtures of organic compounds, wherein the mixture of materials is rectified at hyperbaric pressure and/or ambient pressure and/or vacuum by extractive rectification in contact with a liquid extraction medium to prevent the formation of an azeotropic mixture, wherein the vapors of the concentrated product fraction are condensed and the concentrated product is recovered, and wherein additionally the extraction medium is reconstituted by means of reconcentration and returned to the extractive rectification, **characterized in that**
- the heat contents of the process streams available in the entire process are partially or substantially utilized,
- the mixture of materials to be concentrated is fed into the extractive rectification in form of a boiling liquid or partially vaporized as vapor-liquid-mixture or separated into vapor and liquid, utilizing the heat available in the entire process (W1, W2, W5,),
- at least 50 % of the amount of extraction medium before feeding it into the extractive rectification is enriched with a portion of the mixture of materials or the product to be obtained in the form of a concentrate in an amount of 1.0 to 60 % of the mixture of materials to be concentrated,
- the required energy of the extractive rectification is supplied exclusively or to a substantial portion by indirect heating (W4, W8) and
- the extraction medium is fed in as concentrated a form as possible into the extractive rectification, so that when the dilution of the extraction medium leaving the extractive rectification is as high as possible, the amount of circulating extraction medium is minimized.

## Revendications

1. Procédé pour la production d'un acide nitrique d'une concentration de 75 à 99,9% à partir d'un acide nitrique étendu d'eau, éventuellement chargé d'impuretés, dans lequel on rectifie en surpression et/ou sous pression atmosphérique et/ou sous vide un acide nitrique d'une concentration d'environ 45 à 70% au contact d'un solvant d'extraction liquide pour empêcher la formation d'un azéotrope acide nitrique-eau, on condense les vapeurs de l'acide nitrique concentré et on obtient un acide nitrique concentré, et dans lequel on traite par ailleurs le solvant d'extraction par re-concentration et on le recycle dans la rectification extractive,
**caractérisé en ce que**
- on utilise partiellement ou largement la capacité calorifique des flux de processus disponibles dans l'ensemble du procédé et
- on injecte dans la rectification extractive l'acide nitrique à concentrer en utilisant les quantités de chaleur (W1, W2, W5) disponibles dans l'ensemble du procédé, sous forme de liquide en ébullition ou partiellement vaporisé sous forme de mélange liquide-vapeur ou séparé en vapeur et liquide et
- on enrichit au moins 50% de la quantité de solvant d'extraction, avant son injection dans la rectification extractive, avec de l'acide nitrique, de préférence un acide nitrique dans la plage de concentration de l'acide nitrique à concentrer, en une quantité de 0,1 à 60% de l'acide nitrique à concentrer et
- on envoie l'énergie requise dans la rectification extractive exclusivement ou en majeure partie par chauffage indirect (W4, W8) et
- on envoie le solvant d'extraction sous la forme la plus concentrée possible dans la rectification extractive, de telle sorte que la quantité de solvant d'extraction en circulation est minimisée pour une dilution simultanément maximale du solvant d'extraction s'écoulant de la rectification extractive.

2. Procédé suivant la revendication 1, **caractérisé en ce qu'**on réalise la rectification extractive dans deux colonnes séparées (K1.0, K1.1) ou dans une colonne de concentration partagée en deux sections de colonne (K2.0, K1.1), la première des deux colonnes (K1.0) servant à la rectification de l'acide nitrique à concentrer et à l'obtention d'une vapeur de l'acide nitrique concentré et la seconde des deux colonnes (K1.1) servant à séparer l'acide nitrique du solvant d'extraction, le partage en deux colonnes (K1.0, K1.1) s'effectuant par le point d'injection pour l'acide nitrique à concentrer.

3. Procédé suivant les revendications 1 et 2, **caractérisé en ce que**
- on envoie l'acide nitrique à concentrer dans la partie inférieure de la première des deux colonnes (K1.0) sous forme préchauffée en tant que liquide en ébullition ou mélange vapeur-liquide ou séparé en vapeur et liquide, en utilisant pour le préchauffage la capacité calorifique des flux de processus, de vapeur de chauffage et/ou de condensat de vapeur de chauffage de l'ensemble du procédé, et on le rectifie dans la colonne (K1.0) à contre-courant avec un solvant d'extraction liquide qui a été enrichi en acide nitrique avant son injection dans la première colonne (K1.0) au point que la condensation d'acide nitrique est minimisée lors du contact entre la vapeur d'acide nitrique concentré produite et le solvant d'extraction,
- on soutire le solvant d'extraction de la partie inférieure de la première colonne (K1.0) et on l'envoie en tête de la seconde des deux colonnes (K1.1), dans laquelle on le sépare en un liquide de solvant d'extraction d'une faible teneur résiduelle en acide nitrique et en une vapeur d'acide nitrique,
- le liquide de solvant d'extraction s'accumulant dans une base, chauffée indirectement, de la seconde colonne (K1.1) et en étant soutiré pour le traitement et la re-concentration et
- on recycle la vapeur d'acide nitrique, chassée du liquide de solvant d'extraction, de la tête de la seconde colonne (K1.1) dans la partie inférieure de la première colonne (K1.0).

4. Procédé suivant l'une des revendications 1, 2 et 3, **caractérisé en ce qu'**on préchauffe et/ou vaporise partiellement l'acide nitrique à concentrer par échange de chaleur avec la vapeur d'acide nitrique concentrée (W5) obtenue de la première colonne (K1.0) et/ou avec le solvant d'extraction chaud re-concentré (W1) et/ou avec un condensat de vapeur de chauffage et/ou avec une vapeur de détente d'un condensat de vapeur de chauffage (W2) des évaporateur (W4, W10), chauffés indirectement, de la rectification extractive et/ou de la concentration de solvant d'extraction et/ou avec les fractions de vapeur obtenues lors de la re-concentration du solvant d'extraction.

5. Procédé suivant les revendications 1 à 4, **caractérisé en ce que** les étages de concentration dans les deux colonnes (K1.0 et K1.1) sont exploités sous une pression de système égale ou différente dans la plage de 100 mbar absolus à 5 bar absolus, de préférence entre 200 mbar absolus et 1,3 bar absolu.

6. Procédé suivant les revendications 1 à 5, **caractérisé en ce qu'**on exploite la seconde colonne (K1.1) sous une pression plus basse que la première colonne (K1.0).

7. Procédé suivant l'une des revendications 1 à 6, **caractérisé en ce qu'**on utilise de l'acide sulfurique concentré en tant que solvant d'extraction et on enrichit au moins 50% de cette quantité d'acide sulfurique, avant son injection dans la première colonne (K1.0), avec un acide nitrique dans la plage de concentration de l'acide nitrique à concentrer, en une quantité de 0,1 à 60% de l'acide nitrique à concentrer.

8. Procédé suivant l'une des revendications 1 à 7, **caractérisé en ce qu'**on chauffe le solvant d'extraction s'accumulant dans la base de la seconde colonne (K1.1) dans un évaporateur horizontal (W4) qui est chauffé indirectement et présente dans la zone de son fond, transversalement à la direction de passage de l'acide, des barrages qui forment un système compartimenté en cascade de bulles de distillation individuelles, de telle sorte que l'évaporateur fournit des étapes de séparation supplémentaires qui permettent une réduction de la hauteur de la seconde colonne (K1.1) et/ou une baisse des besoins d'énergie de chauffage pour l'évaporateur horizontal (W4) et/ou le réglage d'une concentration résiduelle plus faible d'acide nitrique dans le liquide de solvant d'extraction s'écoulant de l'évaporateur horizontal.

9. Procédé suivant la revendication 8, **caractérisé en ce qu'**on insuffle de l'air et/ou de la vapeur d'eau dans l'évaporateur horizontal (W4) pour réduire encore la teneur résiduelle d'acide nitrique dans le solvant d'extraction s'écoulant de la seconde colonne (K1.1).

10. Procédé suivant la revendication 7, **caractérisé en ce qu'**on injecte le solvant d'extraction acide sulfurique dans la première colonne (K1.0) à une température dans la plage de 80°C à 160°C.

11. Procédé suivant l'une des revendications 1 à 10, **caractérisé en ce que** l'injection de l'acide nitrique partiellement vaporisé dans la première et/ou seconde colonne (K1.0, K1.1) de la concentration s'effectue de telle sorte qu'un mélange intime est garanti de la partie vapeur de l'acide nitrique partiellement vaporisé à concentrer avec le solvant d'extraction injecté et/ou avec un mélange du solvant d'extraction et de la partie liquide de l'acide nitrique partiellement vaporisé à concentrer, ce mélange intime pouvant être renforcé par des éléments et/ou inserts appropriés, qui sont disposés à l'intérieur des colonnes (K1.0, K1.1) et/ou à l'extérieur de ces dernières.

12. Procédé suivant l'une des revendications 1 à 11, **caractérisé en ce que** le solvant d'extraction soutiré de l'évaporateur horizontal (W4) de la seconde colonne (K1.1) présente une teneur en acide nitrique résiduel allant jusqu'à 5% en poids.

13. Procédé suivant la revendication 12, **caractérisé en ce que** le solvant d'extraction, pour une teneur en acide nitrique résiduel dans la plage de 0,1 à 5% en poids, est soumis dans une étape sous vide à une vaporisation éclair et l'acide nitrique renfermé dans la vapeur ainsi obtenue est retenu et recyclé sous forme d'acide nitrique dilué dans une étape de procédé précédente, de préférence dans la première colonne (K1.0), tandis que le solvant d'extraction liquide appauvri quant à sa concentration d'acide nitrique est soumis à un traitement ultérieur pour sa re-concentration.

14. Procédé suivant l'une des revendications 1 à 13, **caractérisé en ce que** la re-concentration du solvant d'extraction est réalisée en deux ou plusieurs étapes sous des pressions différentes dans la plage de 50 mbar absolus à 4 bar absolus et les fractions de vapeur de cette re-concentration sous pression plus élevée sont utilisées pour chauffer l'acide nitrique à concentrer et/ou pour chauffer indirectement (W4) la colonne de rectification extractive (K1.1).

15. Procédé suivant la revendication 14, **caractérisé en ce que** les fractions de vapeur, avant ou après leur utilisation pour le préchauffage de l'acide nitrique à concentrer, sont séparées dans une ou plusieurs colonnes supplémentaires en une fraction constituée essentiellement d'eau, de préférence de 99 à 99,99% en poids d'eau, et en acide nitrique sous-azéotropique, qui est recyclé dans une étape de procédé précédente, de préférence dans la première colonne (K1.0).

16. Procédé suivant l'une des revendications 1 à 15, **caractérisé en ce que** la vapeur d'acide nitrique concentré obtenue de la première colonne (K1.0) est condensée au moins en partie par échange de chaleur avec l'acide nitrique à concentrer (W5) et l'acide nitrique concentré liquide obtenu éventuellement après son passage au travers d'autres condenseurs (W6) est chargé en tête d'une colonne de blanchiment (K2), tandis que la vapeur d'acide nitrique résiduelle requise est envoyée dans là partie centrale de cette colonne de blanchiment (K2).

17. Procédé suivant la revendication 3, **caractérisé en ce que** le condensat de vapeur de chauffage co-utilisé pour le préchauffage de l'acide nitrique à concentrer est un condensat sous haute pression de la vapeur de chauffage préalablement utilisée pour le chauffage indirect, en particulier provenant du chauffage indirect des deux colonnes (K1.0, K1.1), sous une pression de 6 à 40 bar de surpression, et/ou la vapeur de détente d'un tel condensat de vapeur de chauffage et/ou un mélange du condensat de vapeur de chauffage et de vapeur de détente sous une pression dans la plage de 1 à 16 bar de surpression.

18. Procédé suivant la revendication 9, **caractérisé en ce que** la vapeur d'eau injectée en tant que vapeur d'entraînement dans l'évaporateur horizontal (W4) et/ou dans la seconde colonne (K1.1) est une vapeur d'eau obtenue par détente d'un condensat de vapeur de chauffage.

19. Procédé suivant l'une des revendications 1 et 2, **caractérisé en ce qu'**on réalise la rectification extractive dans une colonne unique, l'acide nitrique partiellement vaporisé à concentrer, séparé en la phase vapeur et en la phase liquide, étant injecté dans la colonne, la phase vapeur étant envoyée au-dessous du point de chargement pour la phase liquide.

20. Installation pour l'exécution d'un procédé pour la production d'un acide nitrique concentré suivant l'une des revendications 1 à 19, **caractérisée en ce que** la colonne de concentration est partagée en deux colonnes (K0, K1), qui sont présentes sous forme de deux colonnes séparées ou de deux sections séparées l'une de l'autre d'une colonne unique,
- la première des deux colonnes (K1.0) étant munie d'au moins une conduite d'alimentation pour l'acide nitrique à concentrer ainsi que d'au moins une conduite d'alimentation disposée au-dessus de celle-ci dans la partie de tête de la colonne (K1.0) pour le liquide de solvant d'extraction, auquel a été de préférence mélangée une partie de l'acide nitrique à concentrer, ainsi que d'une conduite de soutirage pour le mélange de solvant d'extraction liquide dilué de la partie de base de la colonne (K1.0) et
- la tête de la seconde colonne (K1.1) étant raccordée à la conduite du mélange de solvant d'extraction liquide dilué, qui a été soutiré de la première colonne, et la seconde colonne (K1.1) étant par ailleurs munie à son extrémité inférieure d'un évaporateur horizontal (W4) chauffé indirectement, à partir duquel le solvant d'extraction peut être envoyé pour la régénération à une unité de reconcentration, tandis qu'il est prévu en outre en tête de la seconde colonne (K1.1) une conduite de soutirage pour le recyclage dans la première colonne (K1.0) de vapeurs d'acide nitrique qui sont chassées du mélange de solvant d'extraction dilué dans la seconde colonne (K1.1).

21. Installation suivant la revendication 20, **caractérisée en ce que** la conduite d'alimentation pour l'acide nitrique à concentrer est guidée au travers d'au moins un échangeur de chaleur (W5) dans lequel s'effectue un échange de chaleur avec au moins un flux chaud du procédé, de préférence le flux de l'acide nitrique concentré sous forme de vapeur de la première colonne, et qu'il est prévu un mélangeur dans lequel une quantité contrôlée de l'acide nitrique à concentrer est mélangée au solvant d'extraction envoyé dans la première colonne (K1.0).

22. Procédé pour la production d'une fraction de produit concentrée d'un mélange de matières liquide formant au moins un azéotrope, en particulier pour la séparation de produits volatils hautement concentrés de mélanges de matières aqueux dilués ou pour la séparation de mélanges de composés organiques, dans lequel on rectifie en surpression et/ou sous pression atmosphérique et/ou sous vide le mélange de matières par rectification extractive au contact d'un solvant d'extraction liquide pour éviter la formation d'un azéotrope, on condense les vapeurs de la fraction de produit concentrée et on obtient le produit concentré, et dans lequel par ailleurs on traite le solvant d'extraction par reconcentration et on le recycle dans la rectification extractive,
**caractérisé en ce que**
- on utilise partiellement ou largement la capacité calorifique des flux de processus disponibles dans l'ensemble du procédé,
- on injecte dans la rectification extractive le mélange de matières à concentrer en utilisant les quantités de chaleur (W1, W2, W5) disponibles dans l'ensemble du procédé, sous forme de liquide en ébullition ou partiellement vaporisé sous forme de mélange vapeur-liquide ou séparé en vapeur et liquide,
- on enrichit au moins 50% de la quantité de solvant d'extraction, avant son injection dans la rectification extractive, avec une partie du mélange de matières ou avec le produit à obtenir sous forme de concentrat, en une quantité de 0,1 à 60% du mélange de matières à concentrer,
- on envoie l'énergie requise dans la rectification extractive exclusivement ou en majeure partie par chauffage indirect (W4, W8) et
- on envoie le solvant d'extraction sous la forme la plus concentrée possible dans la rectification extractive, de telle sorte que la quantité de solvant d'extraction en circulation est minimisée pour une dilution simultanément maximale du solvant d'extraction s'écoulant de la rectification extractive.
